# EUROPÄISCHE PATENTSCHRIFT

(11) **EP 0 350 565 B1**
(45) Veröffentlichungstag und Bekanntmachung des Hinweises auf die Patenterteilung: **21.07.1993**
(21) Anmeldenummer: 89104358.0
(22) Anmeldetag: 11.03.1989
(51) Int. Cl.: F16K 17/38

(54) **Schmelz-Sicherheitseinrichtung für das Gassystem hydropneumatischer Druckspeicher**
Melting safety device for a hydropneumatic accumulator gas system
Dispositif de sûreté fusible pour un système de gaz d'un accumulateur hydropneumatique

(30) Priorität: 15.04.1988 DE 3812552
(43) Veröffentlichungstag der Anmeldung: 17.01.1990
(73) Patentinhaber: HYDAC TECHNOLOGY GMBH, D-66280 Sulzbach (DE)
(72) Erfinder: Müller, Matthias, D-6660 Zweibrücken (DE); Baltes, Herbert, D-6646 Losheim (DE)
(74) Vertreter: Patentanwälte Bartels und Partner

(56) Entgegenhaltungen:
- EP-A- 0 138 618
- GB-A- 2 009 888
- US-A- 4 059 125
- US-A- 4 099 538
- US-A- 4 553 589

## Beschreibung

Die Erfindung betrifft Schmelz-Sicherheitseinrichtungen, die die Merkmale des Oberbegriffs des Anspruchs 1 aufweisen.

Sicherheitseinrichtungen dieser Art sind bereits bekannt US-A-4 059 125. Um ein unzulässiges Ansteigen des Systemdruckes z.B. in einem Brandfalle zu verhindern, wählt man für das Sperrelement einen Werkstoff, dessen Schmelztemperatur im Bereich bis zu etwa 220°C liegt, beispielsweise eine Zinnlegierung, wie sie als entsprechend niedrig schmelzendes Weichlot handelsüblich ist.

Bei der vorstehend erwähnten, bekannten Sicherheitseinrichtung ist in den dem Gassystem abgekehrten Endabschnitt des Auslaßkanales ein Verschlußnippel eingesetzt, dessen zentrale Durchgangsbohrung mit einem bei unzulässiger Temperaturerhöhung schmelzenden Werkstoff gefüllt ist. Das Ventil ist zwischen diesem Verschlußnippel und dem Gassystem angeordnet und weist einen Ventilkörper auf, dem das ein ebenfalls bei unzulässiger Temperaturerhöhung schmelzendes Blockierglied zugeordnet ist, wobei der gesamte Ventilkörper von dem Kraftantrieb gegen einen Ventilsitz gedrückt wird. Bei einer unzulässigen Temperaturerhöhung schmelzen sowohl der Werkstoff im Verschlußnippel als auch der des Ventilkörpers. Bei einer unzulässigen Temperaturerhöhung wird deshalb das Ventil zerstört. Nach einem Ansprechen muß das Ventil wieder instandgesetzt werden. Für eine solche Instandsetzung muß das ganze Gassystem drucklos gemacht werden, weil der Ventilkörper und die ihn belastende Feder vom Gassystem her in den Auslaßkanal eingeführt werden müssen.

Der Erfindung liegt die Aufgabe zugrunde, eine Schmelzsicherheitseinrichtung zu schaffen, die nach einem Ansprechen problemlos wieder funktionsfähig gemacht werden kann. Diese Aufgabe löst eine Sicherheitseinrichtung mit den Merkmalen des Anspruches 1.

Bei der erfindungsgemäßen Lösung gibt bei einer unzulässigen Temperaturerhöhung das Sperrelement das gesonderte Stellglied frei, das nun infolge des Kraftantriebes auf den Ventilkörper im Sinne eines Öffnens des Ventils einwirkt. Das Ventil wird also nur geöffnet, bleibt aber funktionsfähig. Da außerdem das Sperrelement bei der unzulässigen Temperaturerhöhung den Auslaßkanal freigibt, ist nunmehr der Auslaßkanal für den Austritt von Gas geöffnet. Um nach einem Ansprechen die Schmelz-Sicherungseinrichtung wieder funtionsfähig zu machen, braucht nur das Sperrelement ersetzt zu werden.

Da die Steuerung des Auslaßkanals bei der Erfindung durch das normalerweise geschlossene Ventil bewirkt wird, lassen sich Arbeiten am Sperrelement und der mit diesem zusammenwirkenden Ventilbetätigungseinrichtung durchführen, ohne daß das Drucksystem drucklos ist. Ohne einen Austritt von Druckgas kann daher beispielsweise das Sperrelement zur Änderung der Ansprechtemperatur ausgewechselt werden.

Bei einem vorteilhaften Ausführungsbeispiel gemäß Anspruch 2 ist die Anordnung so getroffen, daß das Sperrelement auch als Dichtelement eines mit dem Ventil in Reihe geschalteten, den Durchlaß des Auslaßkanals steuernden, normalerweise geschlossenen zweiten Ventils ausgebildet ist, das durch das Schmelzen des Sperrelementes öffnet. Bei einem solchen Ausführungsbeispiel ergibt sich eine besonders hohe Betriebssicherheit, weil das zweite Ventil im Normalfalle, d.h. bei nicht geschmolzenem Sperrelement, als zusätzliche Sicherung gegen Druckverluste wirkt, d.h. das Gassystem druckdicht hält, auch wenn das normalerweise geschlossene Ventil ausfallen sollte.

Das Sperrelement kann in Form einer Ringscheibe ausgebildet sein, die als Abstützung für einen an ihr anliegenden Dichtring oder für je einen auf jeder Seite an ihr anliegenden Dichtring des als Ring-Platten-Ventil ausgebildeten zweiten Ventils fungiert. Dabei ergibt sich eine besonders einfache und kompakte Bauweise.

Bei dem mit dem Stellglied zum Öffnen des ersten Ventils zusammenwirkenden Kraftantrieb kann es sich um eine Federanordnung handeln.

Wenn das erste Ventil beispielsweise in einer zentralen, längs verlaufenden Bohrung eines kreiszylinderförmigen Ventilgehäuses sitzt, kann als Federgehäuse für die z.B. durch ein Paket Tellerfedern gebildete Federanordnung eine Hutmutter vorgesehen sein, die mit dem zugekehrten Endbereich des Ventilgehäuses durch eine Verschraubung verbunden ist und in der eine durch das Federpaket beaufschlagte Druckplatte längsverschiebbar geführt ist, die einen zentralen vorspringenden Stift aufweist und so das Stellglied bildet, das auf einen Ventilschaft des ersten Ventils einwirkt, wenn der Kraftantrieb nicht durch das Sperrelement blockiert ist.

Bei einem derartigen Ausführungsbeispiel kann die Anordnung so getroffen sein, daß die Druckplatte als Ventilplatte des als Ring-Platten-Ventil gestalteten zweiten Ventils fungiert und über einen Dichtring auf dem als Ringscheibe gestalteten Sperrelement des Ring-Platten-Ventils abgestützt ist. Bei nicht geschmolzenem Sperrelement blockiert dieses die gegen den Ventilschaft hin verlaufende Stellbewegung des Stiftes der Druckplatte.

Nachstehend ist die Erfindung anhand eines in der Zeichnung dargestellten Ausführungsbeispiels im einzelnen erläutert.

Es zeigen:
- Fig. 1: einen abgebrochen gezeichneten Längsschnitt eines Ausführungsbeispiels der Sicherheitseinrichtung und
- Fig. 2: einen demgegenüber in größerem Maßstab gezeichneten Längsschnitt eines ersten Gasventils des Ausführungsbeispiels mit zugehörigem Ventilkörper, der mit strichpunktierten Linien abgebrochen angedeutet ist.

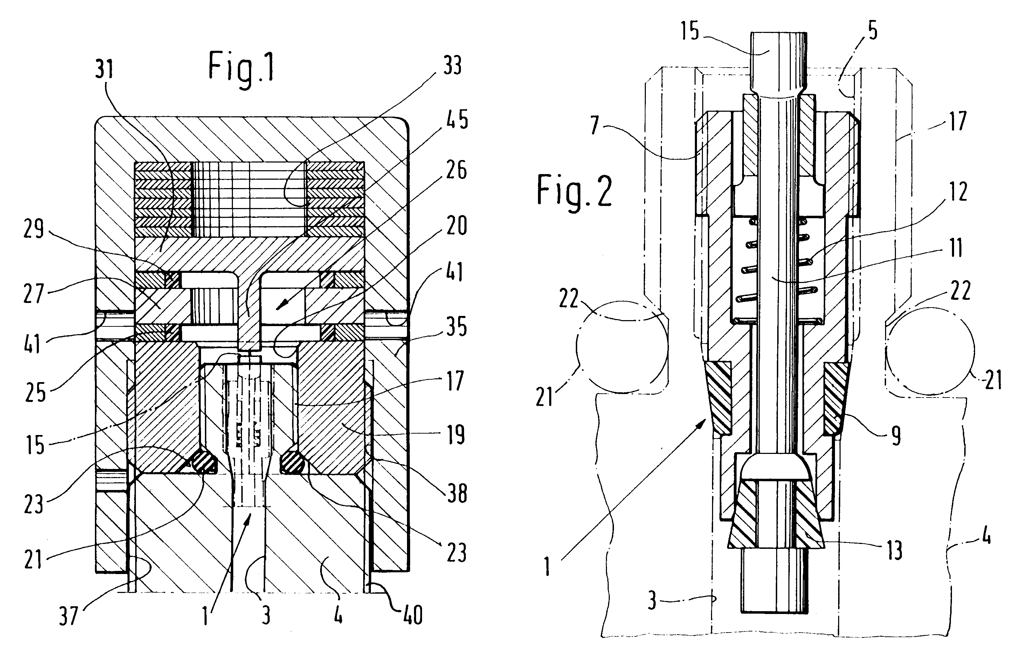

Ein in Fig. 2 vergrößert dargestelltes, als Ganzes mit 1 bezeichnetes Gasventil oder erstes Ventil ist in einer zentralen, längsverlaufenden Durchgangsbohrung 3 eines runden Ventilgehäuses 4 angeordnet, der an die den Gasraum bildende Blase eines nicht gezeigten hydropneumatischen Druckspeichers üblicher Art anvulkanisiert ist, aber auch für andere Druckspeicher verwendbar ist. Die Durchgangsbohrung 3 des Ventilgehäuses 4 weist für die Befestigung des Gasventils 1 in ihrem von der Blase abgekehrten Endabschnitt eine Erweiterung mit Innengewinde 5 (Fig. 2) auf, in die das Gasventil 1 mit seinem Außengewinde 7 eingeschraubt ist. Gegen die Innenwandung der Bohrung 3 ist das Gasventil 1 mittels einer Dichtung 9 mit keilförmigem Querschnitt abgedichtet. Das Gasventil 1 ist von üblicher Bauart und weist einen längsverschiebbar gelagerten, zentralen Ventilschaft 11 auf, der durch eine Ventilfeder 12 normalerweise in eine Schließstellung vorgespannt ist, in der ein aus nachgiebigem Dichtungswerkstoff bestehender Ventilkegel oder -körper 13 den inneren Durchgang des Gasventils dicht abschließt. Das Gasventil 1 wird durch Verschieben des Schaftes 11 gegen die Kraft der Feder 12 geöffnet, indem auf sein in der Zeichnung oben liegendes Schaftende 15 eine entsprechende Stellkraft ausgeübt wird.

Das Ventilgehäuses 4 weist in seinem von der Blase des Druckspeichers abgekehrten, dem Gasventil zugeordneten Endbereich einen verringerten Außendurchmesser und ein Außengewinde 17 auf. Der an den verjüngten Endbereich angrenzende, nicht verjüngte Bereich des Ventilgehäuses 4 trägt ein Außengewinde 40, auf das eine Hutmutter 35 mit ihrem Innengewinde 37 aufschraubbar ist. In den innenliegenden Gewindeabschnitt das Innengewindes 37 der Hutmutter 35 ist eine ringförmige Gewindebuchse 19 mit Außengewinde 38 so eingeschraubt, daß ihre innere, als Sechskant ausgebildete Bohrung 20 den Endbereich des Ventilgehäuses 4 mit dem Außengewinde 17 aufnimmt, wenn die Hutmutter 35 auf das Ventilgehäuse 4 aufgeschraubt ist. Mit ihrer inneren Bohrung 20 bildet die Gewindebuchse 19 einen Teilabschnitt des durch das Gasventil 1 normalerweise geschlossenen Auslaßkanals, der von der Blase über die Bohrung 3 des Ventilgehäuses 4 und durch den inneren Durchgang des normalerweise geschlossenen Gasventils 1 sowie durch die Bohrung 20 der Gewindebuchse 19 hindurch verläuft. Die Bohrung 20 der Gewindebuchse 19 ist gegenüber dem Ventilgehäuse 4 durch einen O-Ring 21 abgedichtet, der in einer Kehle 22 am Übergang zwischen dem das Außengewinde 17 tragenden, verjüngten Abschnitt des Ventilgehäuses 4 zu dessen nicht verjüngtem Abschnitt sitzt und mit schrägen Dichtflächen 23 (Fig. 1) am zugehörigen Endbereich der Gewindebuchse 19 zusammenwirkt.

Die den Dichtflächen 23 gegenüberliegende Stirnfläche der Gewindebuchse 19 ist als ebene Dichtfläche vorgesehen, an der ein Dichtring 25 anliegt, der zu einem als Ganzes mit 26 bezeichneten Ring-Platten-Ventil oder zweites Ventil gehört, durch das hindurch sich der Auslaßkanal für das Gas fortsetzt. Das Ring-Platten-Ventil 26 ist also dem Gasventil 1 in Reihe nachgeschaltet. Es weist eine an der von der Gewindebuchse 19 abgekehrten Seite des Dichtrings 25 anliegende Ringscheibe 27 auf, die aus einem niedrig schmelzenden Weichlot besteht, wobei es sich beim Ausführungsbeispiel um eine Legierung mit einer Schmelztemperatur im Bereich von 160° bis 170° C handelt.

Auf der dem Dichtring 25 abgekehrten Seite der Ringscheibe 27 weist das Ventil einen weiteren Dichtring 29 auf, der durch eine Druckplatte oder Ventilplatte 31 an die Ringscheibe 27 angedrückt ist. Die Druckplatte 31 steht für das Anpressen des Dichtrings 29 an die Ringscheibe 27 und das dadurch bedingte Gegeneinanderdrücken von Ringscheibe 27, Dichtring 25 und zugekehrter Stirnfläche der Gewindebuchse 19 unter der Federkraft eines vorgespannten Pakets von Tellerfedern 33, deren Spannung mit Hilfe eines in den durch die Bohrung 20 gebildeten Innensechskant eingesteckten Sechskantschlüssels einstellbar ist. Die Druckplatte 31 ist eine runde Scheibe, deren Außendurchmesser dem Innendurchmesser der Hutmutter 35 so angepaßt ist, daß sie an der Innenwand der Hutmutter 35 verschiebbar geführt ist. Die Federkraft der Tellerfedern 33 bildet bei dieser Anordnung die Schließkraft des Ring-Platten-Ventils 26, die von den Tellerfedern 33 über die Druckplatte 31 und den Dichtring 29 auf die Ringscheibe 27 aus leicht schmelzendem Werkstoff übertragen wird. Das Ring-Platten-Ventil 26, das zusammen mit der Hutmutter 35 und der in diese eingeschraubten Gewindebuchse 19 eine Baueinheit bildet, ist daher, ebenso wie das Gasventil 1, normalerweise geschlossen. Die Gewindeverbindung zwischen der Hutmutter 35 und der Gewindebuchse 19 ist schwergängiger, beispielsweise durch einen zwischen beide Teile eingebrachten Kleber, als die Gewindeverbindung zwischen der Hutmutter 35 und dem Ventilgehäuse 4, damit man , beispielsweise zum Austausch der gesamten Sicherheitseinrichtung gegen eine solche mit einer anderen Schmelztemperatur, die Hutmutter zusammen mit der Gewindebuchse 19 ohne Änderung der definierten Federspannung vom Ventilgehäuse 4 lösen kann.

Die Wandung der Hutmutter 35 ist in dem der Ringscheibe 27 benachbarten Bereich durch Bohrungen 41 durchbrochen, die das Austrittsende des Auslaßkanals für das Gas bilden. Bei einer Erhöhung der Umgebungstemperatur auf einen Temperaturwert, bei dem die Ringscheibe 27 schmilzt, bewegt die Kraft der Tellerfedern 33 die Druckplatte 31 in Richtung auf die Gewindebuchse 19 und das Gasventil 1, weil die geschmolzene Ringscheibe 27 kein Widerlager mehr für die Federkraft der Tellerfedern 33 bildet. Mit der Druckplatte 31 bewegt sich ein an dieser in zentraler Lage einstückig angeformter Stift 45, der als Stellglied dient, dessen Stellbewegung beim Auflaufen auf das Schaftende 15 des Ventilschafts 11 auf diesen übertragen wird, so daß das Gasventil 1 gegen die Kraft seiner Ventilfeder 12 geöffnet wird. Nachdem die Abdichtung des Ring-Platten-Ventils 26 durch das Wegschmelzen der Ringscheibe 27 aufgehoben und das Gasventil 1 durch die Stellbewegung des Stifts 45 geöffnet ist, wird die Schmelze der Ringscheibe 27 durch die Bohrungen 41 der Hutmutter 35 ausgeblasen, und der Auslaßkanal des Gases ist geöffnet, so daß dieses über die Bohrung 3 des Ventilgehäuses 4, das geöffnete Gasventil 1, die Bohrung 20 der Gewindebuchse 19 und das bei geschmolzener Ringscheibe 27, d.h. bei fehlender Abstützung der den Ventilsitzring bildenden Dichtringe 25, 29 , geöffnete Ring-Platten-Ventil 26 über die Bohrungen 41 ausströmen kann.

Im Betrieb kann die Hutmutter 35 durch Abschrauben vom Ventilgehäuse 4 abgenommen werden, ohne daß Gas aus dem Gasraum der Blase austritt, weil auch bei abgenommener Hutmutter 35 und abgenommenem Ring-Platten-Ventil 26 das Gasventil 1 das Gassystem dicht abschließt. Ohne Behinderung durch das Vorhandensein der Sicherheitseinrichtung kann somit das Gasventil 1 beispielsweise als Füllventil für den Gasraum dienen. Nach anschließendem erneutem Aufschrauben der Hutmutter 35 mit den in diese eingesetzten Komponenten des Ring-Platten-Ventils 26 sowie des zugeordneten Kraftantriebs für die Betätigung des Gasventils 1 ist sodann wieder die Sicherheitsfunktion gewährleistet, wobei der Auslaßkanal nicht nur durch das Gasventil 1, sondern zusätzlich noch durch das normalerweise geschlossene Ring-Platten -Ventil 26 dicht abgeschlossen ist.

Anstelle der Ringscheibe 27 könnte auch eine geschlossene Scheibe mit einer zentralen, den Durchtritt des Stiftes 45 ermöglichenden Bohrung verwendet werden.

## Patentansprüche

1. Schmelz-Sicherheitseinrichtung für das Gassystem hydropneumatischer Druckspeicher, mit
a) einem für den Austritt des Gases aus dem Gassystem freigebbaren Auslaßkanal (3, 20, 41),
b) einem den Auslaßkanal (3, 20, 41) normalerweise dicht abschließenden Sperrelement (27), das aus einem bei unzulässiger Temperaturerhöhung schmelzenden und damit den Auslaßkanal (3, 20, 41) freigebenden Werkstoff besteht,
c) einem den Auslaßkanal normalerweise verschlossen haltenden ersten Ventil (1), das einen Ventilkörper (13) aufweist und bei der unzulässigen Temperaturerhöhung den Auslaßkanal (3, 20, 41) freigibt,
d) einem durch das Sperrelement gebildeten Blockierglied und
e) einem das Blockierglied vorspannenden Kraftantrieb (33),
dadurch gekennzeichnet, daß
f) der Kraftantrieb (33) auf ein gesondertes Stellglied (31, 45) wirkt, und
g) das Sperrelement (27) in die Bewegungsbahn des Stellgliedes (31, 45) ragt, das bei einer Freigabe den Ventilkörper (13) des ersten Ventils (1) entgegen einer weiteren Kraft in seine Offenstellung verschiebt.

2. Schmelz-Sicherheitseinrichtung nach Anspruch 1, dadurch gekennzeichnet, daß das Sperrelement (27) als Dichtelement eines mit dem ersten Ventil (1) in Reihe geschalteten, den Durchlaß des Auslaßkanales (3,20,41) steuernden, normalerweise geschlossenen zweiten Ventils (26) ausgebildet ist, das durch das Schmelzen des Sperrelementes (27) öffnet.

3. Schmelz-Sicherheitseinrichtung nach Anspruch 2, dadurch gekennzeichnet, daß das zweite Ventil (26) ein Ring-Platten-Ventil und das Sperrelement (27) als Ringscheibe gestaltet ist, an der mindestens ein einen Ventilsitzring bildender Dichtring (29, 25) abgestützt ist und die mit einer Ventilplatte (31) zusammenwirkt, die als das Stellglied (31, 45) des Kraftantriebes dient und zum Verhindern der Stellbewegung über den Dichtring auf der das Sperrelement (27) bildenden Ringscheibe gegen die Kraft des Kraftantriebes (33) abgestützt ist.

4. Schmelz-Sicherheitseinrichtung nach Anspruch 3, dadurch gekennzeichnet, daß die Ventilplatte (31) einen aus der Plattenebene vorspringenden, zentralen Betätigungsstift (45) aufweist, der die Öffnung der das Sperrelement (27) bildenden Ringscheibe durchgreift und durch diese gegen die Kraft des Kraftantriebes (33) im Abstand von einem Ventilschaft (15, 11) des Ventilkörpers des ersten Ventlis (1) gehalten ist, der durch die Stellbewegung zum Öffnen des ersten Ventils (1) längsverschiebbar ist.

5. Schmelz-Sicherheitseinrichtung nach Anspruch 4, dadurch gekennzeichnet, daß das erste Ventil (1) in der zentralen, längsverlaufenden, einen Teil des Auslaßkanals (3,20,41) bildenden Bohrung (3) eines kreiszylinderförmigen Ventilgehäuses (4) gehalten ist, das mit einem Außengewinde (40) versehen ist, das eine Hutmutter (35) trägt, welche als Federgehäuse einer den Kraftantrieb (33) bildenden Tellerfederanordnung dient, die sich einerseits am inneren Grunde der Hutmutter (35) und andererseits an der Ventilplatte (31) des zweiten Ventils (26) abstützt, die an der Innenwandung der Hutmutter (35) längsverschiebbar geführt und über den Dichtring des zweiten Ventils (26) auf der das Sperrelement (27) bildenden Ringscheibe abgestützt ist.

## Claims

1. Fusible safety device for the gas system of hydropneumatic pressure reservoirs, with
a) an outlet channel (3, 20, 41), which can be opened for the escape of gas from the gas system,
b) a blocking element (27) normally closing off the outlet channel (3, 20, 41) hermetically, which element (27) consists of a material melting at the time of an inadmissible temperature rise and thus opening the outlet channel (3, 20, 41),
c) a first valve (1) normally keeping the outlet channel closed, which valve comprises a valve body (13) and opens the outlet channel (3, 20, 41) in the case of an inadmissible temperature rise,
d) a blocking member formed by the blocking element and
e) a power drive (33) biasing the blocking member,
characterised in that
f) the power drive (33) acts on a separate control member (31, 45), and
g) the blocking element (27) projects into the path of movement of the control member (31, 45), which at the time of opening moves the valve body (13) of the first valve (1) into its open position against a further force.

2. Fusible safety device according to Claim 1, characterised in that the blocking element (27) is constructed as the sealing element of a normally closed second valve (26), which is connected in series with the first valve (1) and controls the passage through the outlet channel (3, 20, 41), which second valve opens due to the melting of the blocking element (27).

3. Fusible safety device according to Claim 2, characterised in that the second valve (26) is a ring-plate valve and the blocking element (27) is constructed as an annular disc, on which at least one sealing ring (29, 25) forming a valve seat ring is supported and which cooperates with a valve plate (31), which serves as the control member (31, 45) of the power drive and for preventing the adjusting movement is supported by way of the sealing ring on the annular disc forming the blocking element (27), against the force of the power drive (33).

4. Fusible safety device according to Claim 3, characterised in that the valve plate (31) comprises a central actuating pin (45) projecting from the plane of the plate, which pin passes through the opening in the annular disc forming the blocking element (27) and is held by the latter against the force of the power drive (33) at a distance from a valve shaft (15, 11) of the valve body of the first valve (1), which due to the adjusting movement is longitudinally displaceable for opening the first valve (1).

5. Fusible safety device according to Claim 4, characterised in that the first valve (1) is held in the central, longitudinally extending bore (3), forming part of the outlet channel (3, 20, 41), of a circular cylindrical valve housing (4), which is provided with an external thread (40), which supports a cap nut (35), which serves as the spring casing of a cup spring arrangement forming the power drive (33), which arrangement is supported on one side on the inner base of the cap nut (35) and at the other side on the valve plate (31) of the second valve (26), which is guided to slide longitudinally on the inner wall of the cap nut (35) and is supported by way of the sealing ring of the second valve (26) on the annular disc forming the blocking element (27).

## Revendications

1. Dispositif de sécurité à fusible pour le circuit de gaz d'un réservoir de pression hydropneumatique qui comprend :
a) un canal de sortie pouvant être ouvert pour permettre la sortie des gaz par un canal à fermeture commandée (3, 20, 41) ;
b) un élément d'arrêt ou de blocage (27) qui, en temps normal ferme hermétiquement le canal de sortie (3, 20, 41) qui se compose d'une matière fondant lorsque la température devient excessive et, ainsi, libère le canal de sortie (3, 20, 41) ;
c) une première valve (1) tenant normalement le canal de sortie fermé, qui présente un corps (13) qui, lorsque la température devient excessive, ouvre le canal de sortie (3, 20, 41) ;
d) un organe de blocage formé par l'élément d'arrêt et
e) une source d'énergie (33) qui précontraint ledit organe de blocage, caractérisé en ce que :
f) la source d'énergie (33) agit sur un organe de réglage particulier (31, 45) ; et
g) en ce que l'élément d'arrêt ou de blocage (27) s'avance sur la trajectoire de l'organe de réglage (31, 45) qui, libéré, déplace l'obturateur (13) de la première valve (1), à l'encontre d'une autre force, à sa position d'ouverture.

2. Dispositif de sécurité à fusible, selon la revendication 1, caractérisé en ce que l'élément d'arrêt ou de blocage (27) constitue l'élément d'étanchéité d'une seconde valve (26) normalement fermée, qui commande la circulation dans le canal de sortie (3, 20, 41) et qui est normalement fermé, qui s'ouvre par fusion de l'élément fusible (27).

3. Dispositif de sécurité à fusible, selon la revendication 2, caractérisé en ce que la seconde valve (26) est une valve à plaquettes annulaires, tandis que l'élément d'arrêt ou de blocage (27) se présente comme un disque annulaire, sur lequel prend appui, au moins, une bague d'étanchéité faisant fonction de siège pour un joint de valve annulaire (29, 25), et qui coopère avec une plaquette (31) qui fait fonction d'organe de réglage (31, 45) de la source d'action et qui, pour empêcher le mouvement de positionnement prend appui par l'intermédiaire de la bague d'étanchéité, sur le disque annulaire formant l'élément de blocage ou d'arrêt (27), à l'encontre de la force de la source d'énergie (33).

4. Dispositif de sécurité à fusible, selon la revendication 3, caractérisé en ce que la plaquette (31) présente une tige d'actionnement centrale (45), faisant saillie au-dessus du plan de la plaquette, qui traverse l'ouverture du disque annulaire constituant l'élément de blocage ou d'arrêt (27) et qui est tenu par une tige (15, 11) du corps de la première valve (1), à l'encontre de la force de la source d'énergie (33), et qui peut être déplacé longitidinalement de façon à ouvrir la première valve (1).

5. Dispositif de sécurité à fusible, selon la revendication 4, caractérisé en ce que la première valve (1) est montée dans le perçage central longitudinal (3) formant une partie du canal de sortie ou d'évacuation (3, 20, 41), comportant un filetage extérieur (40) qui comporte un écrou-chapeau (35), qui fait fonction d'enveloppe pour un arrangement de ressorts Belleville formant une source de force (33) qui prend appui, d'une part, contre la base intérieure de l'écrou-chapeau (35) et, d'autre part, contre la plaquette (31) de la seconde valve (26), qui se déplace le long de la paroi intérieure de l'écrou-chapeau (35) et prend appui, par l'intermédiaire de la bague d'étanchéité de la seconde valve (26) sur le disque annulaire formant l'élément de blocage ou d'arrêt (27).
